(19) Europäisches Patentamt
European Patent Office
Office européen des brevets

(11) **EP 2 175 798 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(21) Anmeldenummer: **08785314.9**

(22) Anmeldetag: **01.08.2008**

(51) Int Cl.:
*A61C 9/00* (2006.01)    *A61C 13/12* (2006.01)
*A61C 13/00* (2006.01)

(86) Internationale Anmeldenummer:
**PCT/EP2008/006381**

(87) Internationale Veröffentlichungsnummer:
**WO 2009/015905 (05.02.2009 Gazette 2009/06)**

(54) **VORRICHTUNG UND VERFAHREN ZUR SIMULATION DER MOBILITÄT EINES ZAHNS**

APPARATUS AND METHOD FOR SIMULATING THE MOBILITY OF A TOOTH

DISPOSITIF ET PROCÉDÉ DE SIMULATION DE LA MOBILITÉ D'UNE DENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.08.2007 DE 102007036149**

(43) Veröffentlichungstag der Anmeldung:
**21.04.2010 Patentblatt 2010/16**

(73) Patentinhaber: **Ludwig-Maximilians-Universität 80539 München (DE)**

(72) Erfinder:
• **ERDELT, Kurt-Jürgen 81379 München (DE)**

• **SCHWEIGER, Josef 83346 Bergen (DE)**

(74) Vertreter: **Bosch, Matthias et al Bosch Jehle Patentanwaltsgesellschaft mbH Flüggenstrasse 13 80639 München (DE)**

(56) Entgegenhaltungen:
WO-A-2004/066838     US-A- 6 120 287
US-A1- 2006 199 145     US-A1- 2007 065 771

**Beschreibung**

Die vorliegende Erfindung richtet sich auf eine Vorrichtung und Verfahren zur Simulation der Mobilität eines Zahns.

Im natürlichen Gebiss eines Menschen sind die Zähne nicht direkt im Knochen verankert, sondern mit dem Zahnhalteapparat im Kieferknochen befestigt. Der Zahnhalteapparat setzt sich aus kleinen Blutgefäßen, Nerven und den kollagenen Fasern (Sharpey'schen Fasern) zusammen. An den kollagenen Fasern ist der Zahn im Kieferknochen aufgehängt, die Blutgefäße versorgen den Zahn mit Nährstoffen. Die kollagenen Fasern wirken ähnlich wie ein Stoßdämpfer. Eine auf den Zahn einwirkende Kraft wird nicht direkt an den Kieferknochen abgegeben, sondern gedämpft.

Die Beweglichkeit des natürlichen Zahnes unterliegt einem sehr komplexen Bewegungsschema, das von vielen Parametern abhängt. Wie zum Beispiel von der Belastungsgeschwindigkeit, Ausdehnung und Qualität des Kieferknochens, Anzahl der Fasern, Größe des Paradontalen-Spalts, der Zahnmorphologie usw. Die natürliche Beweglichkeit eines gesunden Zahnes beträgt etwa 50 bis 100 $\mu$m bei einer Belastung von 2 N bis 5 N, die jedoch auch abhängig ist von der Zahngruppe.

Aufgrund des komplexen Bewegungsschemas gibt es zwischen einem festgelagerten Zahnersatz (Implantat) und einem normalbeweglichen Zahn wesentliche Unterschiede. Das Implantat leitet die auftreffenden Kräfte direkt in den Kieferknochen weiter. Damit kommt es zu einer kraftproportionalen Auslenkung des Implantats und des Kieferknochens.

Bei einem gesunden natürlichen Zahn werden bei Belastung zunächst die kollagenen Fasern in der sogenannten initialen/desmondontalen Zahnbeweglichkeit gedehnt, bis der Zahn den Kieferknochen berührt. Nach dieser Berührung verhält sich der natürliche Zahn ähnlich wie das Implantat. Die Kraft/Dehnungskurve setzt sich nach diesem Knochenkontakt aus der Dehnung des Zahnes und des Kieferknochens zusammen.

Der initiale/desmondontale Zahnbeweglichkeitsbereich liegt zwischen 2 bis 5 Newton. Bei weiterer Zunahme der Belastung kommt es zur elastischen Verformung von Zahn und Kieferknochen (sekundäre Verformung). Der Übergang von initialen zur sekundären Verformung ist nicht abrupt, sondern beschreibt einen fließenden Übergang.

Aufgrund dessen liegt die eigentliche Zahnbeweglichkeit-Kraftgrenze bei etwa 5 N. Die Zahnbeweglichkeit hat in der Zahnmedizin eine wesentliche Bedeutung bei der Versorgung des Patienten mit einem Zahnersatz. Die Ausfallwahrscheinlichkeit des Zahnersatzes und die Wertigkeit hängt im starken Maße von der Mobilität der Pfeilerzähne ab. Daher ist es sinnvoll, bei der Simulation der Lebensdauer von Zahnersatz diesen jeweiligen auf beweglichen Pfeilern zu lagern. Mit einem solchen Modell würde man der Realität im Mundraum möglichst nahe kommen.

Bisherige Zahnmobilitätsmodelle werden eingesetzt, um die Alterung der prothetischen Restaurationen zu simulieren. Diese Modelle erfüllen jedoch diese Anforderung nur in sehr eingeschränktem Maße, da bei der künstlichen Alterung von Brückenrestaurationen die Zahnbeweglichkeit nur unzureichend erfasst wird. Je größer die Beweglichkeitsunterschiede zwischen den Pfeilerzähnen sind, desto größer ist die Belastung im Verbinderbereich des Brückenglieds. Dies hat gewöhnlich eine Verringerung der Lebensdauer des Zahnersatzes durch Ermüdungsbrüche zur Folge.

Aus dem Stand der Technik sind drei verschiedene Varianten von Simulationsmodellen für *In-vitro* Versuche von Zahnbeweglichkeit bekannt:

1. Starres Metallmodell

Ein starres Modell kann entweder aus Metall im "Lost-Wax"-Verfahren gegossen oder mittels CAD/CAM bzw. Rapid-Prototypingverfahren hergestellt werden. Diese Art von Simulationsmodell weist jedoch keinerlei Beweglichkeit der Einzelzähne auf. Die daraus resultierenden Testergebnisse können nicht ohne weiteres auf die klinische Situation übertragen werden, da ein grundlegender Parameter für den Langzeiterfolg einer Restauration keine Beachtung findet.

2. Modell mit Metallstümpfen in Kunststoffblock mit flexiblem Überzug im Wurzelbereich Dieses Modell wird an der Poliklinik für Zahnärztliche Prothetik der LMU München. für In-vitro Untersuchungen eingesetzt. Dabei sind Metallstümpfe mit einer flexiblen Schicht (z.B. Schrumpfschlauch) überzogen und die Stümpfe insgesamt in einen Kunststoffblock aus PMMA (Polymethacrylsäuremethylester) eingebettet. Der Überzug kann auch mittels eines flexiblen Lackes erfolgen. Diese Art von Modellen lässt eine Zahnbeweglichkeit in einem gewissen Rahmen zu. Jedoch ist das Ausmaß der Beweglichkeit nicht veränderbar, es zeigen sich Auslenkungskurven, die in keiner Weise mit der physiologischen Zahnbeweglichkeitskurve übereinstimmen. Aufgrund der realitätsfremden Konstruktion können auch die mit dem Modell erzielten Testergebnisse nicht auf die klinische Situation übertragen werden.

3. Modell mit natürlichen Zähnen, das im Wurzelbereich mit Polyether ummantelt und in Kunststoffblöcke eingebettet ist.

Ein solches Modell wird beispielsweise von der Zahnklinik Regensburg verwendet. Dabei werden geeignete unversehrte extrahierte Zähne mit einer Schicht aus Polyether (Impregum, Fa. 3M ESPE) ummantelt und anschließend in PMMA-Blöcke eingegossen. Ein wesentlicher Nachteil dieser Modelle besteht darin, dass weder eine exakt definierte Schichtdicke des Polyethermaterials erreicht werden kann, noch reproduzierbaren Modelle hergestellt werden können. Jeder natürliche Zahn weist eine andere Morphologie auf und daher unterscheidet er sich in Bezug auf die Auslenkungskurven. Eine Vergleichbarkeit mit anderen Versuchsreihen ist mit diesem Modell daher ebenfalls nicht möglich.

Die Druckschrift US6120287 beschreibt eine Vorrichtung und ein Verfahren zum Messen orthodontischer Kräfte welche durch eine orthodontische Vorrichtung ausgeübt werden. Hierbei werden die Kräfte gemessen, welche auf einen frei beweglichen künstlichen Zahn in einer Vielzahl feststehender künstlicher Zähne ausgeübt werden, wobei der bewegliche Zahn und die übrigen feststehenden Zähnen eine Replik eines menschlichen Gebisses bilden und alle Zähne über einer Zahnspange miteinander verbunden sind.

Bei den Modellen des Standes der Technik hat es sich daher als nachteilig erwiesen, daß sie nicht den Bewegungsprofilen von natürlichen Zähnen ähneln, der Lockerungsgrad von Zähnen nicht individuell einstellbar ist, die Bewegungsprofile nicht reproduzierbar und die Messungen untereinander nicht vergleichbar sind.

Aufgabe der vorliegenden Erfindung ist es daher, eine Vorrichtung und ein Verfahren bereitzustellen, mit dem bzw. mit Hilfe dessen es möglich ist, eine lebensnahe und zuverlässige, sowie wiederholbare Messung der Zahnbeweglichkeit zu simulieren und diese Messergebnisse als Grundlage für die Erstellung und Anpassung von Zahnprothetik zu verwenden.

Diese Aufgabe wird durch die erfindungsgemäße Vorrichtung mit den Merkmalen gemäß Anspruch 1 sowie durch das Verfahren mit den Merkmalen gemäß Anspruch 7 gelöst. Vorteilhafte Weiterbildungen der vorliegenden Erfindung sind in den Ansprüchen 2 bis 6 wiedergegeben.

Bei dem erfindungsgemäßen Verfahren zur Simulation der Zahnmobilität unter Verwendung einer Simulationsvorrichtung werden folgende Schritte ausgeführt:

- Fixieren einer vorgefertigten Zahnprothetik auf einem Zahnstumpfmodell;
- Ausüben einer bestimmten Anzahl von Last- und Kraftwechselzyklen auf die Zahnprothetik;
- Bestimmung von Kennwerten mittels einer Prüfmaschine (Bruchlast).

Vorteilhafterweise weist die obere Lagerschale an ihrem oberen Ende eine ringförmige Vertiefung auf, in die eine Dichtung so einbringbar ist, dass der längliche Schaft des Zahnstumpfmodells nicht mit der oberen Lagerschale in Berührung kommt. Zur Fixierung der Dichtung wird die obere Lagerschale mittels einer Abdeckplatte abgedeckt. Der verbleibende Spalte zwischen dem länglichen Schaft des Zahnstumpfmodells und der Abdeckplatte hat eine vorbestimmte Breite und simuliert die initialen/desmondontalen Zahnbeweglichkeit. D.h. das Zahnstumpfmodell läßt sich über die gesamte Breite des Spaltes, gedämpft durch die Dichtung bewegen, bis diese an den Rand der Abdeckplatte stößt.

Die erfindungsgemäße Vorrichtung und das erfindungsgemäße Verfahren können sowohl individuell für jeden Patienten verwendet werden, um beispielsweise eine bestimmte Prothese vor der tatsächlichen Implantation zu testen und eine zuverlässige Aussage über die Betriebsdauer zu treffen, als auch als Testmodell für Zahntechniklaboratorien und Zahntechnikhersteller, um eine grundsätzliche Aussage bezüglich Machbarkeit, Betriebsdauer, etc. über bestimmte Materialien oder Prothetiktechniken zu treffen.

Die vorliegende Erfindung wird in den nachfolgenden Figuren anhand einer bevorzugten Ausführungen näher erläutert. Es zeigen:

Fig. 1    eine Darstellung der Simulationsgruppe: Molar, Prämolar, Eckzahn, Frontzahn;
Fig. 2    eine schematische Darstellung einer erfindungsgemäßen unteren Lagerschale;
Fig. 3    ein erfindungsgemäßes Zahnstumpfmodell mit seitlichen Versatzangaben;
Fig. 4    erfindungsgemäße Abdeckplatten;
Fig. 5    erfindungsgemäßes Zahnstumpfmodell mit Abdeckplatte;
Fig. 6    Unterschiedliche Mobilitätsklassen
Fig. 7    Verwendete Dichtungsgeometrien der erfindungsgemäßen Dichtungen;
Fig. 8    eine schematische Darstellung einer erfindungsgemäßen oberen Lagerschale mit Nut für Silikoneinsatz;
Fig. 9    Zahnbeweglichkeitskurve
Fig. 10   Erfindungsgemäße Verdrehsicherung

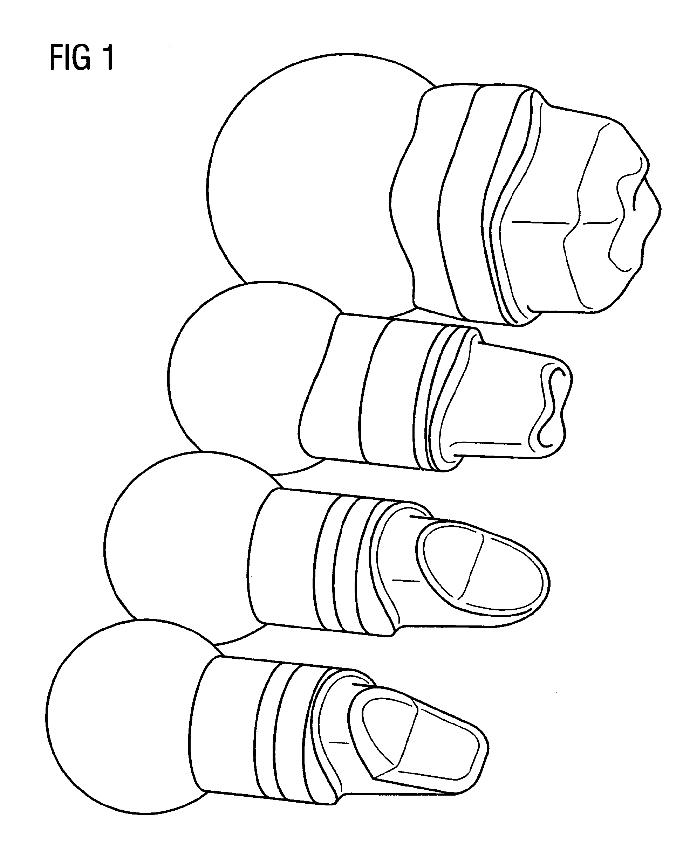

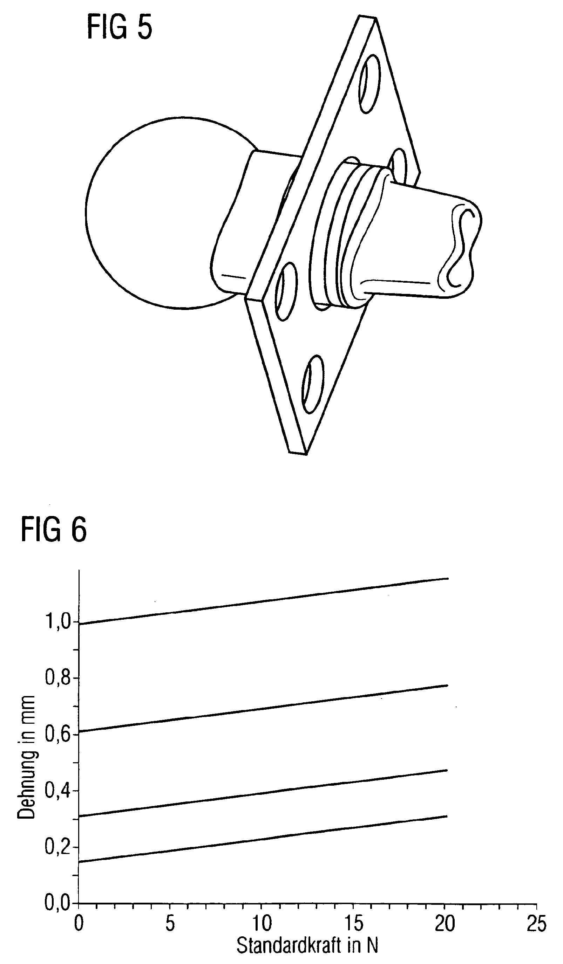

Um eine für die jeweiligen Zahngruppe (Front- und Schneidezähne, Prämolare und Molare) realistische Zahnbeweglichkeit zu simulieren, ist es zweckmäßig, dass die axiale Zahnbeweglichkeit dementsprechend nachempfunden wird. Bei der Simulation der unterschiedlichen Zahngruppen werden diese gemäß Figur 1 durch unterschiedliche Querschnittsformen nachempfunden, um den zahngruppentypischen Widerstand realistisch zu simulieren. Bei Front- und Schneidezähnen ist der Querschnitt kreisförmig, bei Prämolaren ist der Querschnitt elliptisch, siehe Figur 5 und bei Molaren im wesentlichen quadratisch mit Krümmungsradien ausgebildet.

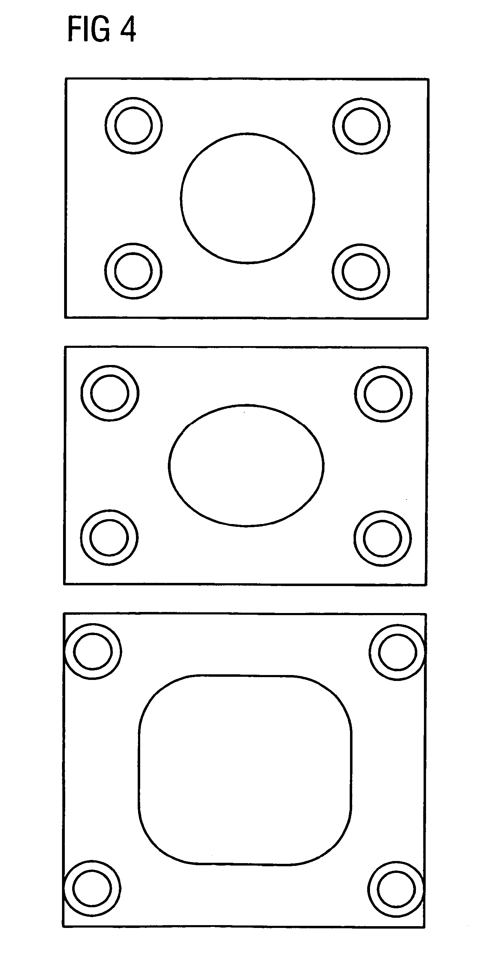

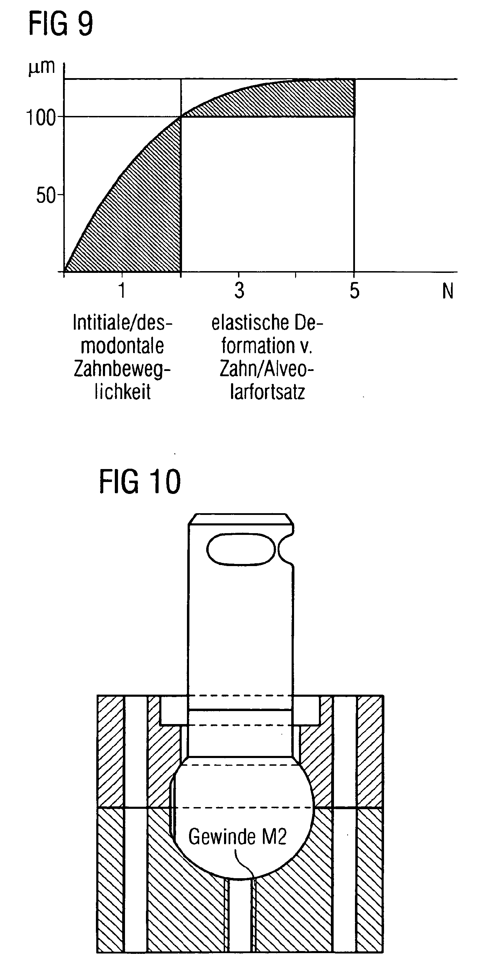

Die Beweglichkeitsbegrenzung in der Horizontalebene erfolgt mit den Abdeckplatten - siehe Figur 4, wobei jedoch eine Verdrehung des Stumpfes um seine Längsachse bei der Simulation der Front- und Eckzähne, aufgrund des kreisrunden Wurzelquerschnittes (Rotationssymmetrie) nicht begrenzt werden kann. Um eine unkontrollierte und somit ungewünschte Verdrehung des Stumpfes dennoch zu unterbinden wird an der Kugel des Zahnstumpfes und der Lagerschalen eine erfindungsgemäße Abplattung, siehe Figur 10, angebracht. Durch die unterschiedlichen Abstände der Abplattungen vom Drehpunkt des Stumpfes kann der Verdrehweg und -winkel festgelegt und bestimmt werden.

Bei einer Verdrehung des Stumpfes über ein bestimmtes Winkelmaß greift die Verdrehsicherung und eine weitergehende Verdrehung wird unterbunden. Dieser Sicherungsmechanismus wird nur bei dem Front- und Eckzahnaufbau benötigt, jedoch nicht bei dem Prämolaren- und Molarenaufbau. Denn hier kommt es bereits aufgrund der Stumpfgeometrie - siehe Figur 5 - und die Form der Aussparung in der Abdeckplatte zu einer wirksamen Verdrehsicherung.

Dennoch können die erfindungsgemäßen Abplattungen an allen Stümpfen angebracht werden, da sie als Schmiermittelreservoir dienen können. In Ermangelung wissenschaftlicher Angaben über das Maß der Längsverdrehung bei Zähnen, wurde mit einem Verdrehwinkel von maximal 10 Grad bei den erfindungsgemäßen Ausführungsformen verfahren, wobei sich ein Verdrehwinkel zwischen 5 Grad und 10 Grad als besonders vorteilhaft und lebensnah erweist.

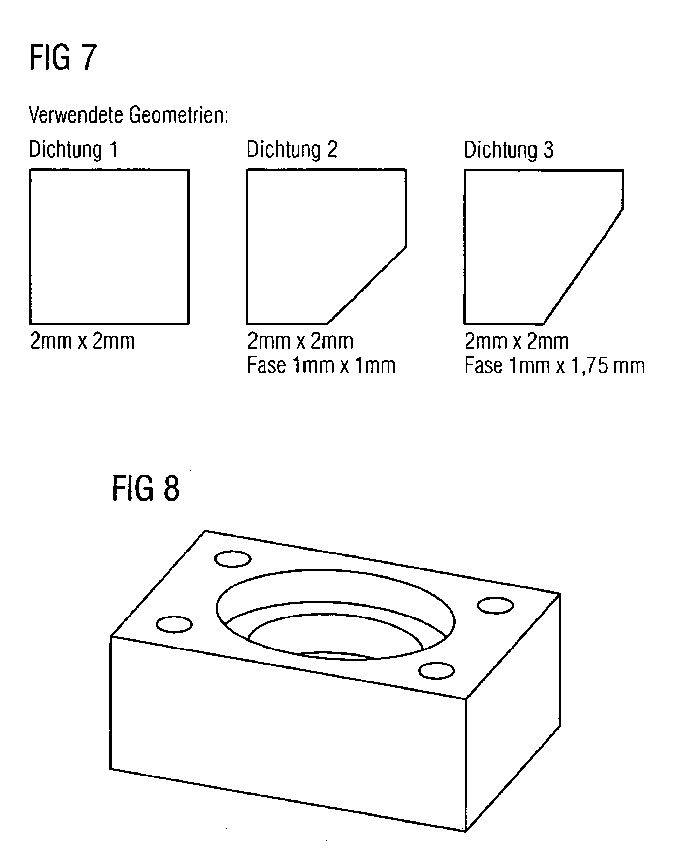

Zum Einstellen und Anpassen der Zahnprothetik ist es erfindungsgemäß zweckmäßig, dass die untere Lagerschale - siehe Figur 1 und 8 - eine Fixiereinrichtung für das Zahnstumpfmodell aufweist. Die Fixierung kann beispielsweise durch eine Schraube erfolgen, die in die untere Lagerschale geschraubt wird und bis zu dem kugelförmigen Lagerbereich vordringt, gemäß Figur 10 ist dies durch ein Gewinde M2 in der unteren Lagerschale realisiert.

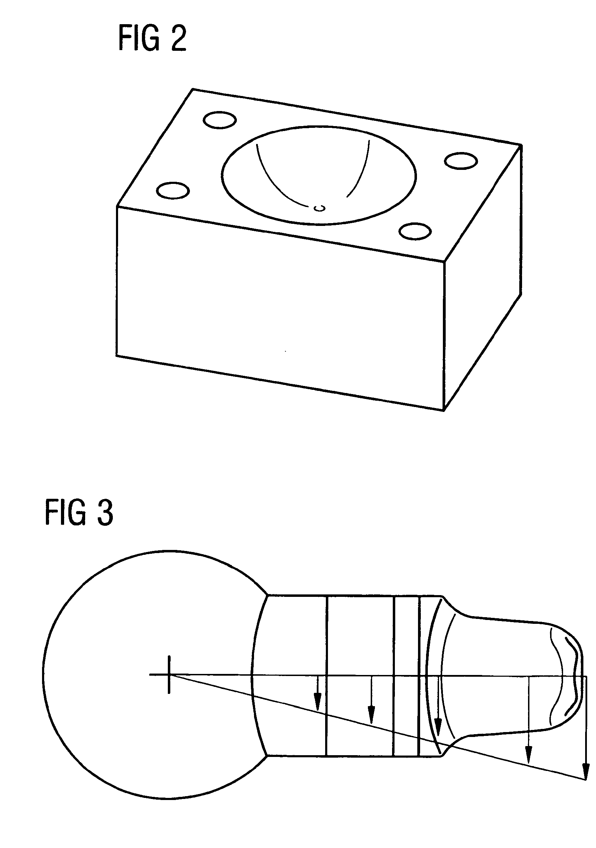

Bei einer bevorzugten Ausführungsform der vorliegenden Erfindung wird die reproduzierbare Bewegung der Zähne dadurch erhalten, dass der Mittelpunkt des kugelförmigen Bereichs - siehe Figur 3 , unterhalb der Zahnstumpfmodells auf 1/3 der Wurzellänge von apikal liegt. Durch die Festlegung des Drehpunktes durch die erfindungemäßen Lagerschalen - siehe Figuren 1 und 8 - in Verbindung mit der Dichtung - siehe Figur 7 - beschreibt das Zahnstumpfmodell eine im wesentlichen gleiche, reproduzierbare Bewegungsbahn. Da das Zahnstumpfmodell einen genau definierten Drehpunkt besitzt, kann unter Zuhilfenahme des Strahlensatzes die Bahnbewegung jedes einzelnen Körperpunktes berechnet werden.

Die Formel zur Berechnung der Mobilität lautet:

$$\text{Spalt} = (\text{Stumpfdurchmesser} - \text{Platteninnendurchmesser}) / 2$$

DM = Abstand des Mobilitätspunktes zum Drehpunkt
DP = Abstand des Anschlagspunktes zum Drehpunkt

$$\text{Mobilität} = (\text{DM}/\text{DP}) * \text{Spalt} * 2$$

In Figur 6 wird gezeigt, wie sich eine Variation des Spalts auf die Mobilität des Simulationssystems auswirkt. Durch die unterschiedlichen Mobilitätsklassen gemäß Figur 6 kann die erfindungsgemäße Vorrichtung mittels unterschiedlicher Abdeckplatten gemäß Figur 4 auf die jeweiligen Anforderungen der Zahnprothetik angepasst und skaliert werden.

Im Kräftebereich zwischen 0 N bis 2 N dehnen sich nur die kollagenen Fasern bzw. werden gestaucht. Dieser Bereich wird auch initiale/desmondontalen Zahnbeweglichkeit genannt. Diese Verformung ist als annähernd linear anzusehen. Um im Modell die Elastizität der Fasern zu simulieren wurden zahntechnische Materialien mit unterschiedlichen E-Modul auf ihre Eignung untersucht. Aufgrund der guten Alterungsbeständigkeit erwies sich additionsvernetztes Silikon als vorteilhaft für die erfindungsgemäßen Dichtungen. Außer additionsvernetztes Silikon können ebenso andere elastischen Stoffe, wie beispielsweise Kautschuk oder entsprechende Kunststoffe verwendet werden.

Um unterschiedliche Verformungsverhalten simulieren zu können, kann die Geometrie der Dichtung variiert werden, wobei sich drei Geometrien als vorteilhaft erwiesen haben. Die Grundform der bevorzugten Dichtungen besteht aus einem Quadrat mit 2 mm Kantenlänge und die einzelnen Varianten unterscheiden sich durch die Stärke der Abfasung:

Dichtung 1 hat keine Abfasung,
Dichtung 2 eine Abfasung von 1*1 mm und
Dichtung 3 eine Abfasung von 1*1,75 mm

Neben diesen Formen sind ebenso andere Formen denkbar, beispielsweise O-Ringe oder Dichtungsringe mit einem elliptischen Querschnitt.

Diese Dichtungslippen werden in die oberen Lagerschale eingefügt und ermöglichen eine linearelastische Bewegung des Zahnes. Nach der linearelastischen Dehnung erfolgt eine elastische Deformation des Zahnhalteapparats, der im Bereich von 2 N bis 5 N stattfindet. Um diese Überlagerung von Faserdehnung und Kieferdehnung zu simulieren, wird die obere Lagerschale mit der Dichtung und der Abdeckplatte kombiniert. Die Dichtung und die Abdeckplatte beeinflussen sich hierbei gegenseitig. Ab einer Belastung von über 5 N tritt, wie in Figur 9 gezeigt, nur noch die Dehnung des Alveolarknochens auf, die annähernd linear verläuft.

In der erfindungsgemäßen Vorrichtung wird die Beweglichkeit des Zahnstumpfes durch den Abstand der Abdeckplatte zum Drehpunkt und dem Spalt zwischen Zahnstumpf und Abdeckplatte eingestellt. Um jedoch eine Reproduzierbarkeit von unterschiedlichen Versuchsaufbauten zu ermöglichen wird eine genauere Einteilung der Stumpfbeweglichkeiten benötigt.

Durch die Einführung von Mobilitätsklassen soll die Vergleichbarkeit von Versuchsreihen verbessert werden. In der erfindungsgemäßen Vorrichtung werden vier Mobilitätsklassen (MK 0.15, MK 0.30, MK 060, MK 1.00) verwendet, um das im wesentlichen gesamte Spektrum der Zahnbeweglichkeit abzudecken. Weitere, feinere Unterteilungen der Mobilitätsklassen sind ebenso denkbar.

MK 0.15 bedeutet eine Beweglichkeit 0,15 mm in einem Abstand von 7 mm von der Abdeckplatte des Simulationsmodells. Dies würde in etwa der Mobilität des natürlichen Zahnes entsprechen. Jede Zahl, hinter MK, gibt die Beweglichkeit des Zahnes in mm. So können unterschiedliche Zahnmobilitäten auf einfache Weise miteinander kombiniert und verglichen werden.

Die Kombination der erfindungsgemäßen Grundmodelle der Zahngruppen, der Abdeckplatten, des Dichtungsmaterials und der Dichtungsform lässt eine große Anzahl von Kombinationsmöglichkeiten zu und somit auch eine große Anzahl von unterschiedlichen Zahnbeweglichkeitskurven.

Gemäß einer bevorzugten Ausführungsform der vorliegenden Erfindung sind folgende Kombinationen aufgrund einer Analyse der Zahnbeweglichkeitskurven für die Mobilitätsklassen zweckmäßig:

Kombinationsmöglichkeiten
Model Front/Eck
MK 0.15; Deckplatte 0.15; Dichtung 1
MK 0.30; Deckplatte 0.30; Dichtung 1
MK 0.60; Deckplatte 0.60; Dichtung 1
MK 1.00; Deckplatte 1.00: Dichtung 1
Modell Prämolar
MK 0.15; Deckplatte 0.15; Dichtung 3
MK 0.30; Deckplatte 0.30; Dichtung 3
MK 0.60; Deckplatte 0.60; Dichtung 2
MK 1.00; Deckplatte 1.00; Dichtung 2
Modell Molar
MK 0.15; Deckplatte 0.15; Dichtung 1
MK 0.30; Deckplatte 0.30; Dichtung 1
MK 0.60; Deckplatte 0.60; Dichtung 1
MK 1.00; Deckplatte 1.00; Dichtung 2

Die vorbeschriebenen Kombinationen von Grundkörper gemäß Zahngruppe, Anschlagplatte, Dichtungsmaterial und Dichtungsform beschreiben eine besonders vorteilhafte Lösung für die erfindungsgemäße Zahnbeweglichkeitssimulation.

Bei einer bevorzugten Ausführungsform der vorliegenden Erfindung wurden für die drei Grundtypen (Front, Prämolar, Molar) folgende Stumpfgeometrien empirisch ermittelt:

Front/Eck:

Durchmesser: 7mm
Wurzellänge: 13 mm
Gesamtlänge: 22 mm
Kronenlänge: 9 mm

Prämolar:

Durchmesser_1: 6,5 mm

Durchmesseer_2: 7mm
Wurzellänge: 14 mm
Gesamtlänge: 22 mm
Kronenlänge: 9 mm

Molar:

Breite_1: 10 mm
Breiter_ 2: 11 mm
Wurzellänge: 13,5 mm
Gesamtlänge: 20,5 mm
Kronenlänge: 7 mm

Die realen Zahngeometrien weisen eine sehr große Streuung der einzelnen Zahnwerte auf, die hier ermittelten Stumpfgeometrien stellen somit nur grobe Näherungen dar, gleichwohl haben sich diese Werte für eine realistische Zahnbeweglichkeitssimulation als ausreichend erwiesen.

Grad 4 Beweglichkeit

Um eine Grad 4 Beweglichkeit zu simulieren, d.h. eine zusätzliche Verschiebung des Stumpfes in axialer Richtung, wird eine Abdeckplatte, mit variabler Dicke, zwischen die obere und die untere Lagerschale in die erfindungsgemäße Vorrichtung eingefügt.

Hierzu wird nach Beendigung der Stumpfbearbeitung der Haltemechanismus gelöst und die Halteschraube entfernt. Auf die Halteschraube wird sodann eine geringe Menge eines weichen Kunststoffes aufgebracht (z.B. Adisil blau). Anschließend wird die Halteschraube wieder eingeschraubt. Die Schraube darf jedoch die horizontale Beweglichkeit des Zahnstumpfmodells nicht beeinträchtigen. Nach dem Festziehen der Halteschraube drückt der Kunststoff den Stumpf nach oben. Wird nun der Stumpf axial belastet, so wird der Kunststoff wieder zusammengedrückt und eine axiale Verschiebung des Stumpfes stellt sich ein, bevor sich der Stumpf seitlich neigen kann.

Um die erfindungsgemäße Vorrichtung möglichst realitätsnah zu gestalten, ist es zweckmäßig, dass die verwendeten Materialien Eigenschaften aufweisen, die denen von Kieferknochen und Zähnen ähnlich sein. Als vorteilhaft haben sich die nachfolgenden Materialkennwerte erwiesen:

- Dentin E-Modul: 18300 MPa
- Kompakta (Knochengewebe) E-Modul: 15000 MPa
- Spongiosa E-Modul: 1370 MPa
- Parodontalgewebe E-Modul: 69 MPa

Während sich für die erfindungsgemäßen Lagerschalen und Abdeckplatten ein Werkstoff eignet, der Kennwerte aufweist, die denen von Kompakta ähnlich sind, ist es zweckmäßig, wenn der Stumpf aus einem Material besteht, welches Kennwerte aufweist, die denen von Dentin ähnlich sind. Für die Pfeiler hat sich verstärktes PUR sowie faserverstärktes Hochleistungspolymer (C-Temp, E-Modul 22000 MPa) als geeignet erwiesen. Für die Lagerschalen und Abdeckplatten kann ebenso faserverstärktes Hochleistungspolymer (C-Temp, E-Modul 22000 MPa) verwendet werden. Ebenso ist es erfindungsgemäß möglich, die Lagerschalen aus Metall oder einer Keramik herzustellen. Als Material für die Dichtungen hat sich Silikon und für die axiale Beweglichkeit Adisil Blau (E-Modul 20-40 MPa) als zweckmäßig erwiesen. Ebenso sind andere Werkstoffe für die Verwendung als Dichtungsmaterial zweckmäßig, solange eine ähnliche elastische Verformbarkeit wie bei Silikon (E-Modul: ). Andere Materialkombinationen der vorgenannten Werkstoffe ist ebenso denkbar.

**Patentansprüche**

1. Vorrichtung zur Simulation der Mobilität eines Zahns, aufweisend:

   eine untere und eine obere Lagerschale, die so ausgebildet sind, dass ein im wesentlichen kugelförmiger Bereich ausgespart bleibt,
   wobei:

      die obere Lagerschale eine im wesentlichen kreisförmige Aussparung aufweist, durch die ein Zahnstumpfmodell führbar ist;
das Zahnstumpfmodell an seinem einen Ende einen im wesentlichen kugelförmigen Lagerbereich aufweist und an seinem anderen Ende einen länglichen Schaft ausbildet;
die obere Lagerschale an ihrem oberen Ende eine ringförmige Vertiefung aufweist, in die eine Dichtung so einbringbar ist, dass der längliche Schaft des Zahnstumpfmodells nicht mit der oberen Lagerschale in Berührung kommt;
die obere Lagerschale und Dichtung mittels einer Abdeckplatte abdeckbar sind; und
die Abdeckplatte so ausgebildet ist, dass zwischen dem länglichen Schaft des Zahnstumpfmodells und der Abdeckplatte ein Spalt vorbestimmter Breite ausgebildet ist, so dass das Zahnstumpfmodell über die gesamte Breite des Spaltes, gedämpft durch die Dichtung, bewegbar ist.

2. Vorrichtung gemäß Anspruch 1, wobei die Dichtung aus Silikon gefertigt ist.

3. Vorrichtung gemäß Anspruch 2, wobei die Dichtung aus additionsvernetztem Silikon gefertigt ist.

4. Vorrichtung gemäß einem der vorherigen Ansprüche, wobei der kugelförmige Lagerbereich und die untere und obere Lagerschale an entsprechender Stelle eine Abplattung zur Verdrehsicherung aufweist.

5. Vorrichtung gemäß einem der vorherigen Ansprüche, wobei die untere Lagerschale eine Fixiereinrichtung für das Zahnstumpfmodell aufweist.

6. Vorrichtung gemäß einem der vorherigen Ansprüche, wobei der Querschnitt des Schaftes des Zahnstumpfmodells kreisförmig, elliptisch oder im wesentlichen quadratisch mit Krümmungsradien ausgebildet ist.

7. Verfahren zum Simulieren der Zahnmobilität unter Verwendung der Simulationsvorrichtung gemäß einem der vorhergehenden Ansprüche, wobei das Verfahren aus den Schritten besteht:

- Fixieren einer vorgefertigten Zahnprothetik auf einem Zahnstumpfmodell
- Ausüben einer bestimmten Anzahl von Last- und Kraftwechselzyklen auf die Zahnprothetik
- Bestimmung von Kennwerten mittels einer Prüfmaschine.

**Claims**

1. A device for simulating the mobility of a tooth, comprising:

a bottom and a top bearing cup which are designed such that a substantially spherical area is spared, wherein:

the top bearing cup comprises a substantially circular recess through which a tooth stump model is adapted to be inserted,
the tooth stump model comprises a substantially spherical bearing portion at the one end thereof and defines a lengthy shaft at the other end thereof;
the top bearing cup comprises a ring-shaped recess at the upper end thereof into which a seal is adapted to be inserted such that the lengthy shaft of the tooth stump model does not get into contact with the top bearing cup;
the top bearing cup and the seal are adapted to be covered by means of a cover plate;
the cover plate is designed such that a gap of predetermined breadth is formed between the lengthy shaft of the tooth stump model and the cover plate, so that the tooth stump model is adapted to be moved along the entire breadth of the gap, attenuated by the seal.

2. The device according to claim 1, wherein the seal is manufactured of silicone.

3. The device according to claim 2, wherein the seal is manufactured of addition cured silicone.

4. The device according to any of the preceding claims, wherein the spherical bearing area and the bottom and top bearing cups comprise a flattening in an appropriate place for anti-twist protection.

**5.** The device according to any of the preceding claims, wherein the bottom bearing cup comprises fixing means for the tooth stump model.

**6.** The device according to any of the preceding claims, wherein the cross-section of the shaft of the tooth stump model is designed to be circular, elliptic, or substantially square with radii of curvature.

**7.** A method for simulating the tooth mobility by making use of the simulation device according to any of the preceding claims, wherein the method comprises the following steps:

- fixing of a prefabricated dental prosthesis on a tooth stump model;
- exerting a particular number of load and force alternation cycles on the dental prosthesis;
- determining characteristic values by means of a testing machine.

**Revendications**

**1.** Dispositif pour la simulation de la mobilité d'une dent, comprenant :

un coussinet de montage inférieur et un coussinet de montage supérieur, qui sont configurés de manière à ménager une zone de cavité sensiblement sphérique,
dispositif dans lequel :

le coussinet de montage supérieur présente un évidement de forme sensiblement circulaire à travers lequel peut être guidé un modèle de moignon dentaire ;
le modèle de moignon dentaire présente à une des ses extrémités, une zone de montage de forme sensiblement sphérique, et forme, à son autre extrémité, un corps allongé ;
le coussinet de montage supérieur présente, à son extrémité supérieure, un creux de forme annulaire dans lequel peut être inséré un joint d'étanchéité, de manière telle que le corps allongé du modèle de moignon dentaire n'entre pas en contact avec le coussinet de montage supérieur ;
le coussinet de montage supérieur et le joint d'étanchéité peuvent être recouverts à l'aide d'une plaque de recouvrement ; et
la plaque de recouvrement est réalisée de façon telle, qu'entre le corps allongé du modèle de moignon dentaire et la plaque de recouvrement soit formé un interstice d'une largeur prédéterminée, de manière à ce que le modèle de moignon dentaire soit mobile sur la totalité de la largeur de l'interstice en étant amorti par le joint d'étanchéité.

**2.** Dispositif selon la revendication 1, dans lequel le joint d'étanchéité est fabriqué en silicone.

**3.** Dispositif selon la revendication 2, dans lequel le joint d'étanchéité est fabriqué en silicone réticulé par addition.

**4.** Dispositif selon l'une des revendications précédentes, dans lequel la zone de montage sensiblement sphérique et le coussinet de montage inférieur et supérieur présentent, en un endroit approprié, un méplat pour assurer un arrêt en rotation.

**5.** Dispositif selon l'une des revendications précédentes, dans lequel le coussinet de montage inférieur présente un système de fixation pour le modèle de moignon dentaire.

**6.** Dispositif selon l'une des revendications précédentes, dans lequel la section transversale du corps allongé du modèle de moignon dentaire présente une forme circulaire, elliptique ou sensiblement carrée avec des rayons de courbure.

**7.** Procédé pour la simulation de la mobilité d'une dent en utilisant le dispositif de simulation selon l'une des revendications précédentes, le procédé se composant des étapes suivantes :

- fixation d'une prothèse dentaire préfabriquée sur un modèle de moignon dentaire,
- exécution d'un nombre déterminé de cycles alternés de charge et de force sur la prothèse dentaire,
- détermination de valeurs caractéristiques au moyen d'une machine de test.

FIG 1

FIG 2

FIG 3

# FIG 4

FIG 5

FIG 6

Dehnung in mm

1,0

0,8

0,6

0,4

0,2

0,0

0        5        10        15        20        25

Standardkraft in N

# FIG 7

Verwendete Geometrien:

| Dichtung 1 | Dichtung 2 | Dichtung 3 |

2mm x 2mm

2mm x 2mm
Fase 1mm x 1mm

2mm x 2mm
Fase 1mm x 1,75 mm

# FIG 8

## FIG 9

Intitiale/des-
modontale
Zahnbeweglichkeit

elastische Deformation v.
Zahn/Alveo-
larfortsatz

## FIG 10

Gewinde M2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6120287 A